# EUROPÄISCHE PATENTSCHRIFT

(11) **EP 2 867 109 B1**
(45) Veröffentlichungstag und Bekanntmachung des Hinweises auf die Patenterteilung: **20.04.2016**
(21) Anmeldenummer: 13725698.8
(22) Anmeldetag: 29.05.2013
(51) Int. Cl.: B62J 17/04

(54) **VERSTELLEINRICHTUNG ZUM VERSTELLEN DER POSITION EINES WINDSCHILDS**
ADJUSTMENT DEVICE FOR ADJUSTING THE POSITION OF A WINDSHIELD
DISPOSITIF DE RÉGLAGE POUR RÉGLER LA POSITION D'UN PARE-BRISE

(30) Priorität: 28.06.2012 DE 102012211182
(43) Veröffentlichungstag der Anmeldung: 06.05.2015
(73) Patentinhaber: Bayerische Motoren Werke Aktiengesellschaft, 80809 München (DE)
(72) Erfinder: MÜHLMANN, Mathias, 82140 Olching (DE); ROWLEY, Ian, 78078 Niedereschach (DE); SCHANZ, Jochen, 78078 Niedereschach (DE)
(86) Internationale Anmeldenummer: PCT/EP2013/061095
(87) Internationale Veröffentlichungsnummer: WO 2014/001013

(56) Entgegenhaltungen:
- EP-A2- 1 752 367
- DE-A1- 3 941 875
- DE-A1- 4 418 954
- GB-A- 2 218 060
- JP-A- 2000 159 172
- JP-A- 2000 159 173
- JP-A- 2000 177 668
- JP-A- 2002 160 683
- US-A1- 2006 028 045

## Beschreibung

Die Erfindung bezieht sich auf eine Verstelleinrichtung zum Verstellen eines Windschildes für Fahrzeuge, insbesondere für Motorräder.

Derartige Verstelleinrichtungen sind beispielsweise aus der DE 39 41 875 C2 bekannt. Zur Verstellung eines Windschildes eines Motorrades umfasst diese Anordnung Führungsschienen, die in Längsrichtung des Fahrzeugs geneigt ausgerichtet sind. In den Führungsschienen laufen Gleitstücke, an denen wiederum schwenkbar der Windschild gehalten ist. Durch die unterschiedlich geneigten Führungsschienen lässt sich der Windschild sowohl in seiner Höhe als auch in seiner Neigung verstellen.

Die Anordnung neigt aufgrund ihrer Ausgestaltung zum Verklemmen der Gleitsteine bezüglich der Führungsschienen, insbesondere im Falle einer Verschmutzung durch Staub und andere Partikel.

Aus der DE 44 18 954 ist dagegen eine Einrichtung zum Verstellen eines Windschildes bekannt, die eine Vielzahl von gelenkig miteinander verbundenen Führungslenkern umfasst, welche unter Bildung eines Viergelenks einerseits mit dem Windschild und andererseits mit einer Fahrzeugstruktur verbunden sind. Die Einrichtung kann einen motorisch betriebenen und selbsthemmenden Antrieb zum Bewegen des Windschildes umfassen.

Die JP 200 2 160683 A, auf der der Oberbegriff von Anspruch 1 basiert, beschreibt eine Antriebskinematik für ein verstellbares Windschild, welches einfach zu montieren und leicht zu verstellen ist.

GB 2 218 060 A offenbart ein zusammenfaltbares und einstellbares Windschild mit einer Anzahl von Scheiben, die über eine faltbare Kinematik an einem Motorrad befestigbar sind.

EP 1 752 367 A2 beschreibt eine Windschild-Verstelleinrichtung mit einer Kinematik zum Verstellen der Position und des Anstellwinkels des Windschildes.

JP 2000 159 173 A zeigt ebenfalls ein verstellbares Windschild für ein Motorrad, welches zwischen einer vorderen unteren und einer hinteren oberen Position mit veränderlichem Anstellwinkel einstellbar ausgebildet ist.

Aufgabe der Erfindung ist es daher, eine Verstelleinrichtung bereitzustellen, die einen möglichst einfachen, leichten und dennoch zuverlässigen Aufbau aufweist sowie kostengünstig herstellbar ist. Gleichzeitig soll die Verbindungseinrichtung insbesondere für den Fahrer einerseits leicht zu betätigen und anderseits in verschiedenen Stellungen einfach zu arretieren sein.

Diese Aufgabe wird gelöst mittels einer Verstelleinrichtung mit den Merkmalen des Patentanspruchs 1, einer Windschildanordnung gemäß dem Patentanspruch 5 sowie einem Fahrzeug mit den Merkmalen des Patentanspruchs 6.

Vorteilhafte Ausgestaltungsformen der Erfindung ergeben sich aus den jeweils abhängigen Patentansprüchen.

Demnach wird eine Verstelleinrichtung zum Verstellen eines Windschildes eines Fahrzeuges, insbesondere eines Motorrades, vorgeschlagen, mit
- einem mit dem Windschild verbindbaren Windschildhalter,
- einer fahrzeugseitig befestigbaren Trägerstruktur,
- einer Schubkurbel, wobei die Schubkurbel um eine erste Schwenkachse schwenkbar mit der Trägerstruktur und um eine zweite Schwenkachse schwenkbar mit dem Windschildhalter verbunden ist, sowie
- einer Linearführung, wobei der Windschildhalter mittels einer Schwenklageranordnung linearbeweglich in einer Längsrichtung von der Linearführung geführt sowie um eine dritte Schwenkachse schwenkbar ist, wobei die erste, zweite und dritte Schwenkachse parallel zueinander ausgerichtet sind.

Der Windschildhalter ist also mittels der Schwenklageranordnung mit der Linearführung verbunden, so dass der Windschildhalter in einer ersten Längsrichtung linear bewegt bzw. entlang der Linearführung verschoben werden kann. Gleichzeitig ist die Schwenklageranordnung dazu ausgebildet, den Windschildhalter zusätzlich auch schwenkbar mit der Linearführung zu verbinden. Dies bedeutet, dass der Windschildhalter verschiebbar und gleichzeitig verschwenkbar an der Linearführung gelagert ist.

Die Schwenklageranordnung kann entweder als Teilabschnitt des Windschildhalters ausgebildet oder als separates Element mit diesem fest verbunden sein. Zusätzlich kann die Schwenklageranordnung Gleitelemente für die Linearbewegung umfassen.

Mittels der beschriebenen Verstelleinrichtung kann somit das Windschild als Wind- und Wetterschutz an eine jeweilige Fahrergröße bzw. Sitzbankhöheneinstellung des Fahrzeugs angepasst werden. Mit anderen Worten vereint die beschriebene Verstelleinrichtung in besonders vorteilhafter Art und Weise eine Linearführung mit einer mehrgelenkigen Schwenkanordnung und erzielt eine Beweglichkeit der Verstelleinrichtung mit lediglich drei Schwenkachsen und einer möglichst geringen Anzahl an beweglichen Bauteilen. Zusätzlich wird ein Längsausgleich mittels der beschriebenen Linearführung erzielt, so dass eine sichere und einfache Höhen- bzw. Neigungseinstellung des Windschildes ermöglicht wird, die mit einer geringen Anzahl an Bauteilen auskommt und sich somit durch ein geringeres Gewicht und eine einfache Montage auszeichnet.

Entsprechend der Erfindung umfasst die Verstelleinrichtung außerdem einen Drehantrieb zum Schwenken der Schubkurbel um mindestens die erste und/oder die zweite Schwenkachse. Eine Betätigung der Verstelleinrichtung erfolgt also beispielsweise durch Bereitstellen einer Drehbewegung des Drehantriebs, der die Schubkurbel in Schwenkbewegung versetzt, wodurch das mit dem Windschildhalter verbundene Windschild in die gewünschte Position bewegbar ist.

Des Weiteren umfasst der Drehantrieb zumindest eine Antriebseinheit, einen mit der Antriebseinheit drehgekoppelten Schneckenantrieb und ein in den Schneckenantrieb eingreifendes und mit der Schubkurbel drehfest gekoppeltes Zahnrad umfassen.

Der Drehantrieb ist dabei vorzugsweise derart ausgestaltet, dass eine von der Antriebseinheit bereitgestellte Drehbewegung eine Drehbewegung des Schneckenantriebs um eine Drehachse des Schneckenantriebs bewirkt. Das drehfest mit der Schubkurbel gekoppelte Zahnrad wird aufgrund seines Eingriffs in den Schneckenantrieb ebenfalls zu einer Drehbewegung veranlasst. Das Zahnrad ist ebenfalls vorzugsweise mit einer Symmetrieachse koaxial zu der ersten oder der zweiten Schwenkachse angeordnet, so dass eine Drehbewegung des Zahnrades ein entsprechendes Verschwenken der Schubkurbel um die erste bzw. die zweite Schwenkachse bewirkt.

Besonders vorteilhaft wirkt sich diese Ausgestaltung des Drehantriebs bzw. der gesamten Verstelleinrichtung dadurch aus, dass der Schneckenantrieb eine Selbsthemmung der gesamten Verstelleinrichtung bewirkt, die einerseits ein unbeabsichtigtes Verstellen des Windschildes aus einer eingestellten definierten Position, wie beispielsweise durch Windkräfte während einer Fahrt des Fahrzeugs, verhindert. Andererseits wird auf besonders einfache Weise ermöglicht, das Windschild im Rahmen eines Bewegungsumfanges nicht nur in den jeweiligen Endpositionen sondern stufenlos in einer beliebigen Anzahl von Zwischenpositionen einzustellen und in dieser zu fixieren. Auf eine separate Verriegelungsanordnung zur Fixierung kann folglich verzichtet werden.

Entsprechend einer besonders bevorzugten Ausgestaltungsform umfasst die Antriebseinheit ein manuell betätigbares Handrad zum manuellen Bereitstellen der Drehbewegung der Antriebseinheit. Beispielsweise kann demnach die Antriebseinheit aus dem Handrad bestehen, das koaxial auf einer gemeinsamen Welle mit dem Schneckenantrieb ausgeführt ist. Selbstverständlich sind ebenso andere abweichende Anordnungen möglich. Insbesondere kann eine oder mehrere Übersetzungsstufe zwischen Handrad und Schneckenantrieb zur Beeinflussung eines Übersetzungsverhältnisses vorgesehen werden. Das manuell betätigbare Handrad erlaubt eine besonders schnelle und komfortable Verstellung des Windschilds entsprechend einer persönlichen Vorliebe und ergonomischen Voraussetzungen des Fahrers. Zusätzlich ergeben sich Gewichts- und bauraumvorteile, da auf weitere zusätzliche Antriebskomponenten sowie eine Energieversorgung hierfür verzichtet werden kann.

Außerdem ist anstelle des Handrades ebenso eine motorisch und/oder hydraulisch betrieben Antriebseinheit zur Bereitstellung der Drehbewegung möglich. Jedoch kann der besonders einfache und leichte Aufbau der Handrad-Variante nicht erreicht werden.

Beispielsweise ist der Drehantrieb in einem Lagerungsbereich der schwenkbaren Verbindung der Schubkurbel und der Trägerstruktur und/oder in einem Lagerungsbereich der schwenkbaren Verbindung der Subkurbel mit dem Windschildhalter angeordnet. Dies bietet den Vorteil, dass der Drehantrieb besonders einfach und stabil gelagert bzw. abgestützt ist, insbesondere im Falle einer manuellen Betätigung. Hierbei besteht grundsätzlich die Gefahr, dass der Nutzer eine große Druckkraft auf den Drehantrieb, beispielsweise durch zusätzliches und zumindest teilweises Aufstützen auf den Drehantrieb, verursacht, die ansonsten zu einer Beschädigung und einen Ausfall des Drehantriebs führen kann.

Die beschriebene Linearführung kann beispielsweise mindestens zwei, im Wesentlichen in Längsrichtung des Fahrzeugs ausgerichtete Führungsschienen umfassen und der Windschildhalter mit jeweils einem Gleitschuh der Schwenklageranordnung linearbeweglich mit einer der beiden oder der mehreren Führungsschienen linearbeweglich sowie schwenkbar gekoppelt sein.

Dies bedeutet, dass also in einem im Fahrzeug eingebauten Zustand die Führungsschienen im Wesentlichen in Fahrtrichtung des Fahrzeugs weisen und parallel zueinander angeordnet sind. Zweckmäßigerweise können die Führungsschienen trotz ihrer Ausrichtung zusätzlich eine Neigung gegenüber einer horizontalen Ebene aufweisen. Der Grad der Neigung hängt beispielsweise von der Art des zum Einsatz kommenden Fahrzeuges ab und kann entsprechend gewählt werden.

Mittels des beschriebenen Gleitschuhs der Schwenkanordnung kann der Windschildhalter an der Führungsschiene geführt in deren Längsrichtung entlang gleiten und wird gleichzeitig von dieser geführt. Darüber hinaus soll, wie voranstehend beschrieben, die Schwenklageranordnung mit dem Gleitschuh derart ausgestaltet sein, dass der Windschildhalter relativ zu der Führungsschiene um die dritte Schwenkachse kipp- bzw. schwenkbar ist. Aufgrund der Verschiebbarkeit des Gleitschuhs bzw. der Schwenklageranordnung ist somit auch die dritte Schwenkachse entsprechend verschiebbar.

Beispielsweise kann die Schwenklageranordnung einen als Kugelgelenk ausgebildeten Gleitschuh umfassen. So kann der Gleitschuh zum Beispiel einen im Wesentlichen Kugelförmigen Körper aufwesien, der auf der Führungsschiene längsverschiebbar aufgesteckt ist und in einen die Kugel umgreifenden Abschnitt des Windschildhalters aufgenommen sein, wobei der Gleitschuh und der umgreifende Abschnitt zusammen die Schwenklageranordnung des Windschildhalters bilden.

Gemäß einer weiteren Ausführungsform umfasst der Windschildhalter zwei armförmige Halteelemente, wobei jedes Halteelement ein erstes Ende und ein entgegengesetztes zweites Ende umfasst, wobei an dem ersten Ende jeweils einer der Gleitschuhe der Schwenklageranordnung angeordnet und das jeweilige Halteelement im Bereich des zweiten Endes zum schwenkbaren Verbinden mit der Schubkurbel ausgebildet ist.

Ebenfalls kann der Windschildhalter einteilig ausgebildet sein, beispielsweise mittels einer Verbindung der beiden armförmigen Halteelemente.

Ferner wird eine Windschildanordnung für ein Fahrzeug vorgeschlagen, mit einem Windschild und einer Verstelleinrichtung, wobei die Verstelleinrichtung gemäß der gegebenen Beschreibung ausgebildet und der Windschildhalter mit dem Windschild zur Höhen- und Neigungseinstellung des Windschilds verbunden ist.

Außerdem wird ein Fahrzeug mit einer Windschildanordnung beschrieben, wobei die Windschildanordnung gemäß der gegebenen Beschreibung ausgebildet und die Trägerstruktur fahrzeugseitig befestigt ist.

Die Erfindung wird nachfolgend anhand eines Ausführungsbeispiels unter Bezugnahme auf die Zeichnungen näher erläutert. Darin zeigen:
- Fig. 1: eine erste perspektivische Ansicht einer Verstelleinrichtung gemäß der Beschreibung,
- Fig. 2: eine zweite perspektivische Ansicht der Verstelleinrichtung gemäß Fig. 1,
- Fig. 3: eine dritte perspektivische Ansicht der Verstelleinrichtung gemäß Fig. 1, und
- Fig. 4: eine Detailansicht eines Drehantriebs der Verstelleinrichtung gemäß Fig. 1.

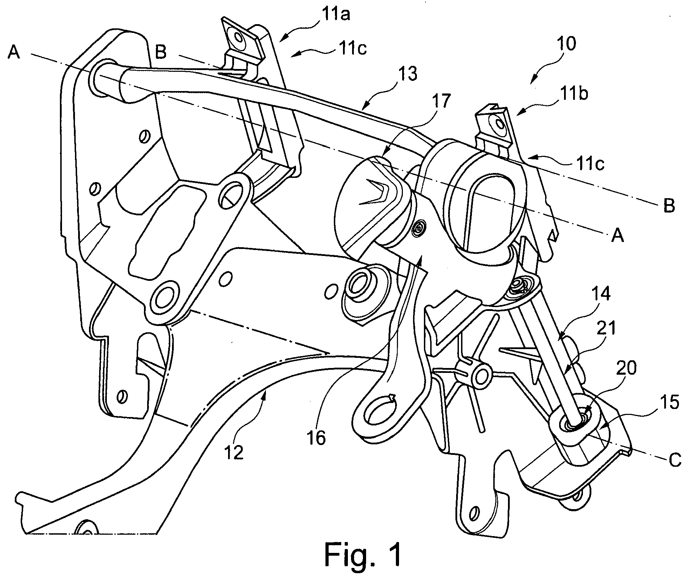

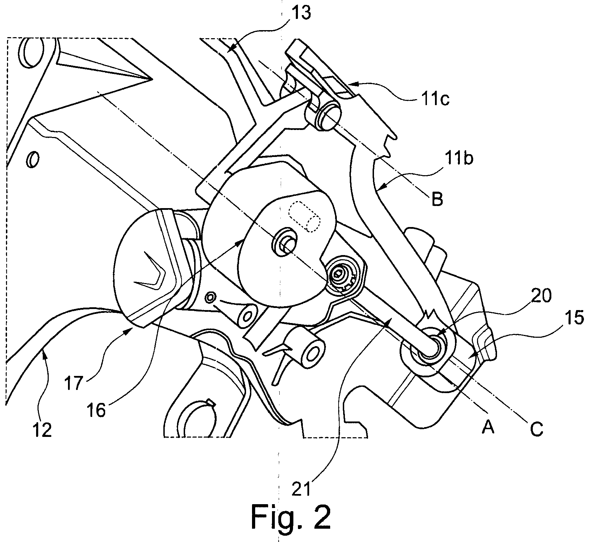

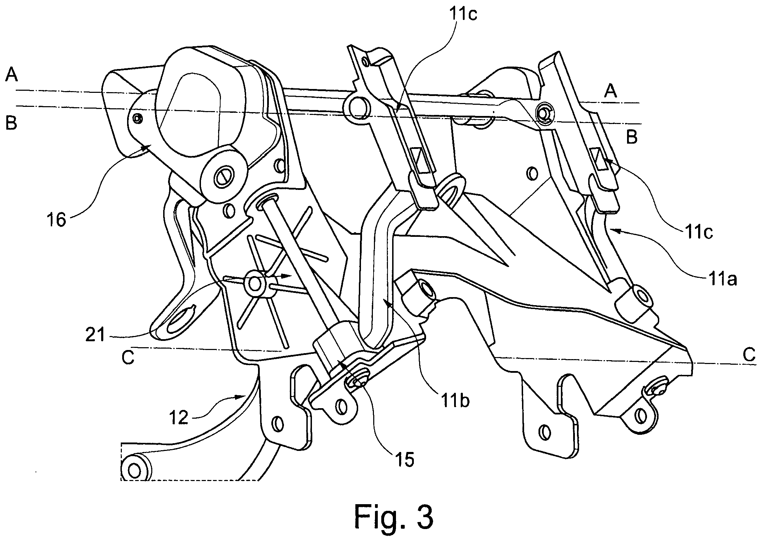

Die Fig. 1, 2 und 3 zeigen verschiedene perspektivische Ansichten einer Verstelleinrichtung 10 zum Verstellen eines Windschildes eines Fahrzeuges (nicht dargestellt), insbesondere eines Motorrades, mit
- einem mit dem Windschild (nicht dargestellt) verbindbaren Windschildhalter , der von zwei armförmigen Halteelementen 11 a, 11 b definiert wird,
- einer fahrzeugseitig befestigbaren Trägerstruktur 12,
- einer Schubkurbel 13, wobei die Schubkurbel 13 um eine erste Schwenkachse A schwenkbar mit der Trägerstruktur 12 und um eine zweite Schwenkachse B schwenkbar mit den beiden Halteelementen 11 a, 11 b des Windschildhalters verbunden ist, sowie
- einer Linearführung 14, wobei die beiden Halteelemente 11 a, 11 b des Windschildhalters mittels einer Schwenklageranordnung 15 linearbeweglich in einer Längsrichtung von der Linearführung 14 geführt sowie um eine dritte Schwenkachse C schwenkbar sind. Die Schwenkachsen A, B, C sind parallel zueinander sowie in der dargestellten Ausführungsform im Wesentlichen horizontal und in Querrichtung zu einer Fahrzeuglängsachse (in eingebautem Zustand) ausgerichtet.

Die Verstelleinrichtung 10 umfasst außerdem einen Drehantrieb 16 zum Schwenken der Schubkurbel 13 um mindestens die erste Schwenkachse A.

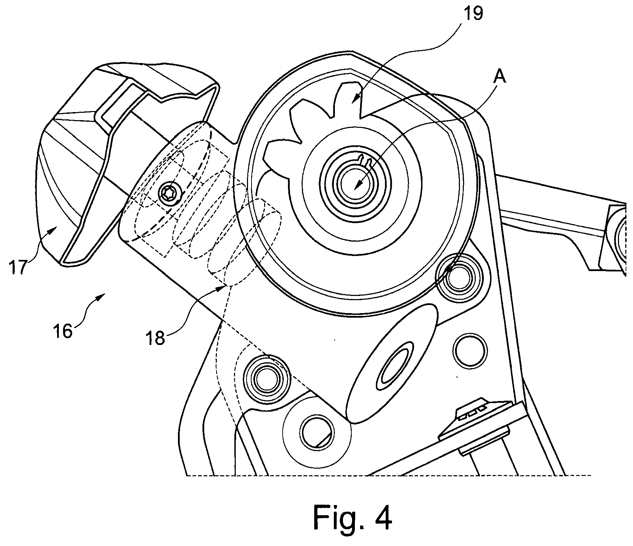

Wie insbesondere in Fig. 4 dargestellt, umfasst der Drehantrieb 16 hierzu eine Antriebseinheit 17, einen mit der Antriebseinheit 17 drehgekoppelten Schneckenantrieb 18 und ein in den Schneckenantrieb 18 eingreifendes und mit der Schubkurbel 13 drehfest gekoppeltes Zahnrad 19. Bevorzugt ist die Antriebseinheit 17 als ein manuell betätigbares Handrad zum manuellen Bereitstellen der Drehbewegung der Antriebseinheit 17ausgeführt. Diese Ausgestaltung des Drehantriebs 16 bietet den Vorteil einer Selbsthemmung, so dass das Windschild nicht in eine andere als die eingestellte Position gedrückt werden kann, sowie in jeder beliebigen Zwischenstellung somit stufenlos verstell- und. fixierbar ist.

Des Weiteren umfasst die Linearführung gemäß den Fig. 1, 2 und 3 zwei, im Wesentlichen in Längsrichtung des Fahrzeugs ausgerichtete Führungsschienen 21, die zusätzlich gegenüber einer horizontalen Ebene gekippt sind. Ein jeweiliger Kippwinkel ist insbesondere von der Art des Fahrzeugs abhängig. Jedes Halteelemente 11 a, 11 b des Windschildhalters ist mit einem Gleitschuh 20 der Schwenklageranordnung 15 linearbeweglich mit einer der beiden Führungsschienen 21 linearbeweglich und schwenkbar gekoppelt.

Zusätzlich umfasst jedes Halteelement 11a, 11b einen Verbindungsabschnitt zum Verbinden mit dem Windschild. Lediglich beispielsweise kann der jeweilige Verbindungsabschnitt eine flächige Auflagefläche für das Windschild umfassen, sowie Ausnehmungen zur Aufnahme von Befestigungsmitteln für das Windschild.

Außerdem umfasst jedes Halteelement 11 a, 11 b ein erstes Ende und ein entgegengesetztes zweites Ende, wobei an dem ersten Ende jeweils einer der Gleitschuhe 20 der Schwenklageranordnung 15 angeordnet ist. Im Bereich des zweiten Endes sind die Halteelemente 11 a, 11 b zum schwenkbaren Verbinden mit der Schubkurbel 13 ausgebildet.

## Patentansprüche

1. Verstelleinrichtung (10) zum Verstellen eines Windschildes eines Fahrzeuges, insbesondere eines Motorrades, mit
- einem mit dem Windschild verbindbaren Windschildhalter (11a, 11b),
- einer fahrzeugseitig befestigbaren Trägerstruktur (12),
- einer Schubkurbel (13), wobei die Schubkurbel (13) um eine erste Schwenkachse (A) schwenkbar mit der Trägerstruktur (12) und um eine zweite Schwenkachse (B) schwenkbar mit dem Windschildhalter (11a,11 b) verbunden ist, sowie
- einer Linearführung (14), wobei der Windschildhalter (11 a,11 b) mittels einer Schwenklageranordnung (15) linearbeweglich in einer Längsrichtung von der Linearführung (14) geführt sowie um eine dritte Schwenkachse (C) schwenkbar ist, wobei die Schenklageranordnung (15) dazu ausgebildet ist, den Windschildhalter (14) schwenkbar mit der Linearführung zu verbinden, wobei die erste (A), zweite (B) und dritte (C) Schwenkachse parallel zueinander ausgerichtet sind, wobei die Verstelleinrichtung (10) außerdem einen Drehantrieb (16) zum Schwenken der Schubkurbel (13) um mindestens die erste (A) und/oder die zweite Schwenkachse (B) umfasst,
**dadurch gekennzeichnet, dass** der Drehantrieb (16) zumindest eine Antriebseinheit (17), einen mit der Antriebseinheit (17) drehgekoppelten Schneckenantrieb (18) und ein in den Schneckenantrieb (18) eingreifendes und mit der Schubkurbel (13) drehfest gekoppeltes Zahnrad (19) umfasst.

2. Verstelleinrichtung nach Anspruch 1, wobei die Antriebseinheit (17) ein manuell betätigbares Handrad zum manuellen Bereitstellen der Drehbewegung der Antriebseinheit (17) umfasst.

3. Verstelleinrichtung nach einem der Ansprüche 1 bis 2, wobei die Linearführung (14) mindestens zwei, im Wesentlichen in Längsrichtung des Fahrzeugs ausgerichtete Führungsschienen (21) umfasst und der Windschildhalter (11a, 11b) mit jeweils einem Gleitschuh (20) der Schwenklageranordnung (15) linearbeweglich mit einer der mindestens zwei Führungsschienen (21) linearbeweglich sowie schwenkbar gekoppelt ist.

4. Verstelleinrichtung nach einem der Ansprüche 1 bis 3, **dadurch gekennzeichnet, dass** der Windschildhalter (11a, 11b) zwei armförmige Halteelemente (11a,11b) umfasst, wobei jedes Halteelement (11a,11b) ein erstes Ende und ein zweites Ende umfasst, wobei an dem ersten Ende jeweils einer der Gleitschuhe (20) der Schwenklageranordnung (15) angeordnet und das jeweilige Halteelement (11a,11 b) im Bereich des zweiten Endes zum schwenkbaren Verbinden mit der Schubkurbel (13) ausgebildet ist.

5. Windschildanordnung für ein Fahrzeug, mit einem Windschild und einer Verstelleinrichtung, wobei die Verstelleinrichtung (10) nach einem der Ansprüche 1 bis 4 ausgebildet und der Windschildhalter (11a, 11b) mit dem Windschild zur Höhen- und Neigungseinstellung des Windschilds verbunden ist.

6. Fahrzeug mit einer Windschildanordnung, wobei die Windschildanordnung nach Anspruch 5 ausgebildet und die Trägerstruktur (12) fahrzeugseitig befestigt ist.

## Claims

1. An adjustment device (10) for adjusting a windscreen of a vehicle, in particular of a motorcycle, comprising
- a windscreen holder (11a, 11 b) which can be connected to the windscreen,
- a carrier structure (12) which can be attached to the vehicle,
- a slider crank (13), wherein the slider crank (13) is connected to the carrier structure (12) such that it can swivel about a first swivel axis (A) and is connected to the windscreen holder (11 a, 11 b) such that it can swivel about a second swivel axis (B), and
- a linear guide (14), wherein the windscreen holder (11a, 11b) is guided by the linear guide (14) in a linearly movable manner in a longitudinal direction by a swivel bearing arrangement (15) and is swivellable about a third swivel axis (C), wherein the swivel bearing arrangement (15) is configured to connect the windscreen holder (14) swivelably to the linear guide, wherein the first swivel axis (A), second swivel axis (B) and third swivel axis(C) are oriented parallel to one another, wherein the adjustment device (10) also comprises a rotary drive (16) for swivelling the slider crank (13) about at least the first swivel axis (A) and/or the second swivel axis (B),
**characterised in that** the rotary drive (16) comprises at least one drive unit (17), a worm drive (18) rotatably coupled to the drive unit (17) and a gearwheel (19) engaging in the worm drive (18) and coupled for co-rotation with the slider crank (13).

2. An adjustment device according to claim 1, wherein the drive unit (17) comprises a manually operable handwheel to manually provide the rotational movement of the drive unit (17).

3. An adjustment device according to either claim 1 or claim 2, wherein the linear guide (14) comprises at least two guide rails (21) which are substantially oriented in the longitudinal direction of the vehicle and the windscreen holder (11a, 11b) with a respective sliding block (20) of the swivel bearing arrangement (15) is coupled in a linearly movable manner to one of the at least two guide rails (21) in a linearly movable and swivellable manner.

4. An adjustment device according to any one of claims 1 to 3, **characterised in that** the windscreen holder (11 a, 11 b) comprises two arm-shaped holding elements (11 a, 11b), wherein each holding element (11a, 11b) comprises a first end and a second end, one of the sliding blocks (20) of the swivel bearing arrangement (15) being respectively arranged at the first end and the respective holding element (11a, 11b) being configured for swivellable connection with the slider crank (13) in the region of the second end.

5. A windscreen arrangement for a vehicle, comprising a windscreen and an adjustment device, wherein the adjustment device (10) is configured according to any one of claims 1 to 4 and the windscreen holder (11a, 11b) is connected to the windscreen for the vertical and inclined adjustment of the windscreen.

6. A vehicle with a windscreen arrangement, wherein the windscreen arrangement is configured according to claim 5 and the carrier structure (12) is attached to the vehicle.

## Revendications

1. Dispositif de réglage (10) pour permettre de régler un pare-brise d'un véhicule en particulier d'une motocyclette comprenant :
- un porte pare-brise (11a, 11b) pouvant être relié au pare-brise,
- une structure-support (12) pouvant être fixée côté véhicule,
- une manivelle de poussée (13), cette manivelle de poussée (13) étant articulée sur la structure-support (12) autour d'un premier axe de pivotement (A) et sur le porte-pare-brise (11a, 11b) autour d'un second axe de pivotement (B), et
- un guidage linéaire (14), le porte-pare-brise (11a, 11b) pouvant être déplacé linéairement dans la direction longitudinale par le guidage linéaire (14) au moyen d'un dispositif de palier pivotant (15) et pouvant pivoter autour d'un troisième axe de pivotement (C), le dispositif de palier pivotant (15) étant réalisé pour permettre d'articuler le porte-pare-brise sur le guidage linéaire (14), le premier axe de pivotement (A), le second axe de pivotement (B) et le troisième axe de pivotement (C) étant orientés parallèlement, et le dispositif de réglage (10) comprenant en outre un entraînement en rotation (16) pour permettre le pivotement de la manivelle de poussée (13) autour du premier axe de pivotement (A) et/ou du second axe de pivotement (B),
**caractérisé en ce que**
l'entraînement en rotation (16) comprend au moins une unité d'entraînement (17), une transmission à vis sans fin (18) solidaire en rotation de l'unité d'entraînement (17) et un pignon (19), engrenant avec l'entraînement à vis sans fin (18) et couplé solidairement en rotation à la manivelle de poussée (13).

2. Dispositif de réglage conforme à la revendication 1,
dans lequel l'unité d'entraînement (17) comprend un volant manoeuvrable manuellement pour permettre l'obtention manuelle du mouvement de rotation de l'unité d'entraînement (17).

3. Dispositif de réglage conforme à l'une des revendications 1 et 2,
dans lequel
le guidage linéaire (14) comprend au moins deux rails de guidage (21) orientés essentiellement dans la direction longitudinale du véhicule, et le pare-brise (11a, 11b) est couplé par un patin de glissement (20) respectif du dispositif de palier pivotant (15) avec l'un des deux rails de guidage (21) pour pouvoir pivoter et se déplacer linéairement.

4. Dispositif de réglage conforme à l'une des revendications 1 à 3,
**caractérisé en ce que**
le porte-pare-brise (11a, 11b) comprend deux éléments de retenue (11a, 11b) en forme de bras, chacun de ces éléments de retenue (11a, 11b) comprenant une première extrémité et une seconde extrémité, sur la première extrémité étant respectivement monté l'un des patins de glissement (20) du dispositif de palier pivotant (15) et chaque élément de retenue (11a, 11b) étant réalisé dans la zone de la seconde extrémité pour permettre son articulation sur la manivelle de poussée (13).

5. Dispositif de pare-brise pour un véhicule comprenant un pare-brise et un dispositif de réglage, le dispositif de réglage (10) étant réalisé conformément à l'une des revendications 1 à 4, et le porte-pare-brise (11a, 11b) étant relié au pare-brise pour permettre le réglage en hauteur et en inclinaison du pare-brise.

6. Véhicule comprenant un dispositif de pare-brise, le dispositif de pare-brise étant réalisé conformément à la revendication 5 et la structure-support (12) étant fixée côté véhicule.
